**Europäisches Patentamt**

**European Patent Office**

**Office européen des brevets**

(11) Publication number: **0 198 947**
**A1**

# (12) EUROPEAN PATENT APPLICATION

(21) Application number: **85111537.8**

(22) Date of filing: **12.09.85**

(51) Int. Cl.⁴: **G 01 F 23/00**
**G 01 F 23/22**
**//B60Q9/00**

(30) Priority: **27.03.85 JP 44126/85 U**

(43) Date of publication of application:
**29.10.86 Bulletin 86/44**

(84) Designated Contracting States:
**DE GB**

(71) Applicant: **TOYOTA JIDOSHA KABUSHIKI KAISHA**
**1, Toyota-cho Toyota-shi**
**Aichi-ken 471(JP)**

(72) Inventor: **Kitazawa, Sakae**
**c/o Toyota Jidosha 1, Toyota-cho**
**Toyota-shi Aichi-ken(JP)**

(72) Inventor: **Katoh, Toranosuke**
**c/o Toyota Jidosha 1, Toyota-cho**
**Toyota-shi Aichi-ken(JP)**

(72) Inventor: **Kawahara, Hiroyuki**
**c/o Toyota Jidosha 1, Toyota-cho**
**Toyota-shi Aichi-ken(JP)**

(72) Inventor: **Yamaguchi, Yoshiteru**
**c/o Toyota Jidosha 1, Toyota-cho**
**Toyota-shi Aichi-ken(JP)**

(72) Inventor: **Tanoue, Ken**
**c/o Toyota Jidosha 1, Toyota-cho**
**Toyota-shi Aichi-ken(JP)**

(74) Representative: **Pellmann, Hans-Bernd, Dipl.-Ing. et al,**
**Patentanwaltsbüro**
**Tiedtke-Bühling-Kinne-Grupe-Pellmann-Grams-Struif**
**Bavariaring 4**
**D-8000 München 2(DE)**

(54) Liquid level checking system for vehicles.

(57) A liquid level checking system has a level sensor means (10, 12) for sensing whether the level of at least one kind of liquid in a reservoir is adequate or not, indicating element means (16, 18) adapted to be turned on and off such as to inform whether the liquid level is adequate or not, and an operation switch means (14) connected between the level sensor means and the indicating element means such as to selectively form a circuit for supply electric power to the indicating element means. The system also has a power supply circuit means (20) designed for supplying electric power to the indicating element means (16, 18) only when the engine is not operating. The operation switch means (14) is switchable between an indicating element means checking position for confirming safe functioning of the indicating element means and a level checking position for confirming that the liquid level sensed by the level sensor means (10 and 12) is adequate.

# LIQUID LEVEL CHECKING SYSTEM FOR VEHICLES

## BACKGROUND OF THE INVENTION

The present invention relates to a system for checking the level of a liquid used in a vehicle and, more particularly, to a system suitable for use in checking the level of a liquid such as engine lubricating oil, coolant and so forth used in vehicles such as an automobile.

For safe and efficient operation of a vehicle such as an automobile, it is essential that the levels of liquids such as engine lubricating oil, cooling water and so forth are maintained at adequate levels. From this point of view, vehicles are equipped with systems which permit the user to check the levels of the liquids as desired. Generally, however, it is not easy to check the levels of lubricating oil and cooling water particularly in automobiles of the type called "one-box car" because in this type of automobile the engine is mounted under the driver's seat. Under this circumstance, there is an increasing demand for a liquid level checking system which will permit an easy and accurate checking of the liquid levels.

To meet this demand, electric liquid level detectors have been proposed in which the liquid level is electrically detected by a sensor and, when the liquid level is below a predetermined level, an indicator lamp on the instrument panel is lit on such as to warn the driver that the liquid level has come down below a predetermined level.

This type of liquid level checking system, however, suffers from a problem in that the accuracy of the detection of the liquid level is impaired due to a fluctuation of the liquid level during running of the vehicle. This problem is serious particularly in the detection of the level of the lubricating oil because the level of the lubricating oil varies largely depending on whether the engine is operating or not.

To obviate this problem, Japanese Utility Model Laid-Open No. 163826/1981 proposes a liquid level checking system having two sensors capable of sensing the levels of a liquid in each of the operative and inopeative states of the engine and a change-over switch which transmits one of the signals from the sensors selectively depending on the state of the engine, such as to light the indicator lamp at critical liquid levels both in the operative and inoperative states of the engine.

This liquid checking system still suffers a problem in that the warning function of the liquid level checking system is failed when the indicator lamp has been burnt out. Namely, in such a case, the driver cannot notice the fact that the liquid level has come down below the limit level because the indicator lamp does not light on.

## SUMMARY OF THE INVENTION

Accordingly, an object of the invention is to provide a liquid level checking system which is capable of accurately checking the level of a liquid in a vehicle.

For attaining a high accuracy of checking, the liquid level checking system of the invention is designed for detecting the liquid level when the engine is not operating.

To this end, according to the invention, there is provided a liquid level checking system having a level sensor means for sensing whether the level of at least one kind of liquid in a reservoir is adequate or not, indicating element means adapted to be turned on and off such as to inform whether the liquid level is adequate or not, and an operation switch means connected between the level sensor means and the indicating element means such as to selectively form a circuit for supply electric power to the indicating element means, the system comprising: a power supply circuit means designed for supplying electric power to the indicating element means only when the engine is not operating, wherein the operation switch means is switchable between an indicating element means checking position in which the switch means completes the circuit for power supply from the power supply circuit means to the indicating element means for confirming safe functioning of the indicating element means and a level checking position in which the switch means completes the circuit for power supply from the power supply circuit means to the indicating element means on condition that the liquid level sensed by the level sensor means is adequate.

According to a preferred form of the invention, the power supply circuit is designed for supplying the power of a series of batteries to indicating element means through relays.

In the use of the liquid level checking system of he invention, the driver first turns, when the engine is not operating, an operation switch to the failure checking side in order to detect any failure in the indicating element means. The driver can confirm the safe functioning of the indicating element means through checking the state of lighting of the indicating element means. Then, the driver turns the operation switch to the level checking side to check the liquid level or levels through confirming the state of lighting of the indicating element means. Namely, safe lightning of the indicating element means shows that the liquid level or levels are maintained adequately, thus allowing an easy and accurate check of the liquid level or levels.

The above and other objects, features and advantages of the invention will become clear from the following description of the preferred embodiments when te same is read in conjunction with the accompanying drawings.

BRIEF DESCRIPTION OF THE DRAWINGS

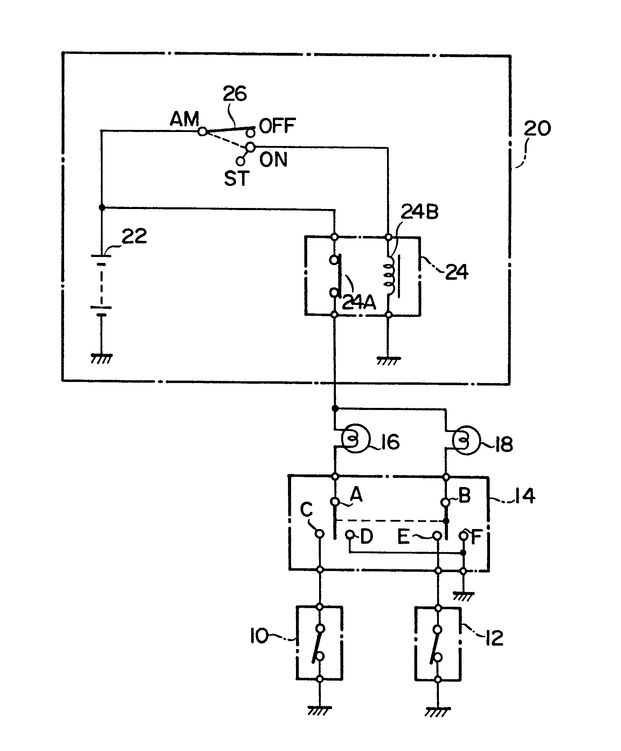

The attached sole Figure is a circuit diagram showing an electric circuit used in an embodiment of a liquid level checking system in accordance with the invention.

DESCRIPTION OF THE PREFERRED EMBODIMENT

Referring to the attached Figure, a liquid level checking system in accordance with the invention has a first switch 10 serving as a level sensor for sensing the level of cooling water in the radiator of an engine, and a second switch 12 serving as a level sensor for sensing the level of lubricating oil in the engine. These switches 10 and 12 are connected to indicator lamps 16 and 18, respectively, through an operation switch 14. The first and second switches 10 and 12 may be known lead switches which are designed to be closed only when the respective liquid levels are adequate. The operation switch 14 is a self-resetting type switch which is designed such that, when it is turned to failure checking side for checking any failure in the indicator lamps 16 and 18, terminals A and B of these switches are grounded through terminals D and F, whereas, when turned to the level checking side, the terminals A and B are connected to the switches 10 and 12 through terminals C and E. When the switch is used
neither for the failure check nor for liquid level check,
the terminals A and B are reset to neutral states and are
kept connected to the indicator lamps 16 and 18.

A power supply circuit 20 is arranged such that the
power from the batteries 22 is supplied to the indicator
lamps 16 and 18 only when the engine is not operating.

More specifically, the power supply circuit 20 is
constructed such that the power of the battery 22 is
supplied to the indicator lamps 16 and 18 through a relay
24 of the batteries 22. The relay 24 has a relay contact
24A which is connected between the batteries 22 and the
indicator lamps 16 and 18, and a relay coil 24B which is
connected to the batteries 22 through the ignition switch
26. The arrangement is such that, when the ignition switch
26 is turned off, the relay contact 24A is closed, whereas,
when the ignition switch 26 is turned on, the relay coil
24B is energized such as to open the relay contact 24A.
It will be seen that, with this circuit arrangement, the
indicator lamps 16 and 18 are supplied with power of the
batteries only when the ignition switch 26 is off.

With the ignition switch 26 off, when the operation
switch 14 is operated for the checking of failure in the
indicator lamps 16 and 18, the terminals A and B are
connected to the terminals D and F so that the circuits to the indicator lamps 16 and 18 are completed. The indicator lamps 16 and 18 will be lit on if these lamps have not been brunt out. After confirming the safe functioning of the indicator lamps 16 and 18, the operation switch 14 is operated for the purpose of checking of the liquid levels, so that the contacts A and B are connected to the switches 10 and 12 through the contacts C and E. If the level of the cooling water in the radiator and the level of the engine lubricating oil are adequate, both the switches 10 and 12 are closed so that the circuits for the power supply to the indicator lamps 16 and 18 are completed to light the indicator lamps on in, for example, green color, thus informing the driver of the facts that both liquid levels are adequate. In the event that either one or both of the liquid levels have come down below a predetermind limit levels, the switches 10 and 12 are opened so that the indicator lamps 16 and 18 are not lit on. The driver therefore can recognize that one or both of the liquid levels have come down below the limit levels.

It will be seen that the described embodiment of the invention is designed such that the checking of the liquid levels is allowed only when the engine is not operating. Therefore, the liquid levels can be checked without suffering from the influence of the fluctuation of liquid levels, in contrast to the conventional checking system which is designed for sensing the liquid levels during running of the vehicle. Thus, the liquid level checking system of the invention affords a high accuracy of the level check under a constant checking condition.

Although the invention has been described through specific terms, it is to be noted here that the described embodiment is only illustrative and various changes and modifications are imparted thereto without departing from the scope of the invention which is limited solely by the appended claims.

WHAT IS CLAIMED IS

1.  A liquid level checking system having a level sensor means for sensing whether the level of at least one kind of liquid in a reservoir is adequate or not, indicating element means adapted to be turned on and off such as to inform whether the liquid level is adequate or not, and an operation switch means connected between said level sensor means and said indicating element means such as to selectively form a circuit for supply electric power to said indicating element means, characterized in that said system comprises a power supply circuit means (20) designed for supplying electric power to said indicating element means (16 and 18) only when the engine is not operating, and that said operation switch means (14) is switchable between an indicating element means checking position in which said switch means (14) completes the circuit for power supply from said power supply circuit means (20) to said indicating element means for confirming safe functioning of said indicating element means (16, 18) and a level checking position in which said switch means (14) completes the circuit for power supply from said power supply circuit means (20) to said indicating element means (16, 18) on condition that the liquid level sensed by said level sensor means (10) and (12) is adequate.

2.  A liquid level checking system according to claim 1, wherein said power supply circuit means (20) includes a relay

0198947

(24) through which th power of batteries (22) is delivered to indicating element means (16 and 18).

3.   A liquid level checking system according to claim 2, wherein said relay (24) has a relay contact (24A) connected between said batteries (22) and said indicating element means and a relay coil (24B) connected to said batteries (22) through an ignition switch (26).

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 85111537.8 |
| Y | DE - A1 - 2 550 570 (BMW) <br> * Fig. * | 1 | G 01 F 23/00 <br> G 01 F 23/22 <br> //B 60 Q 9/00 |
| Y | DE - A1 - 2 850 149 (BMW) <br> * Fig. 1,2 * | 1 | |
| A | DE - A1 - 2 643 675 (BENDIX) <br> * Fig. 1; page 11, line 5 - page 12, line 18 * | 1 | |
| A | DE - A1 - 2 802 193 (LUCAS) <br> * Fig. 1-4; page 5, paragraph 5 - page 7, paragraph 2 * | 1 | |
| A | DE - B2 - 1 916 582 (GIRLING) <br> * Fig. 1,4; claim 1 * | 1 | TECHNICAL FIELDS SEARCHED (Int. Cl.4) <br><br> G 01 F 23/00 <br> B 60 Q 9/00 <br> B 60 Q 11/00 <br> G 01 D 18/00 |

The present search report has been drawn up for all claims

| Place of search | Date of completion of the search | Examiner |
|---|---|---|
| VIENNA | 10-07-1986 | GRONAU |